# EUROPEAN PATENT APPLICATION

(11) **EP 4 506 225 A1**
(43) Date of publication of application: **12.02.2025**
(21) Application number: 23784299.2
(22) Date of filing: 06.04.2023
(51) Int. Cl.: B60W 50/08

(54) **VEHICLE CONTROL METHOD AND APPARATUS**

(30) Priority: 06.04.2022 CN 202210355567
(71) Applicant: Great Wall Motor Company Limited, Baoding, Hebei 071000 (CN)
(72) Inventor: SUN, Xuelong, Baoding, Hebei 071000 (CN); LI, Shuhui, Baoding, Hebei 071000 (CN); CHENG, Siyu, Baoding, Hebei 071000 (CN); LI, Chunyu, Baoding, Hebei 071000 (CN)
(74) Representative: Klunker IP Patentanwälte PartG mbB
(86) International application number: PCT/CN2023/086433
(87) International publication number: WO 2023/193736

(57) **Abstract**

A vehicle control method, a vehicle control apparatus, a system, a computer storage medium and a computer program product are provided. The method includes: obtaining a parameter for personality configuration, wherein the parameter for personality configuration is used to indicate personality information of a virtual character of the vehicle; determining a level of an intermediate effect parameter according to the parameter for personality configuration and a first correspondence relationship, the first correspondence relationship reflects a correspondence relationship between a personality and a desired driving experience of a driver whose personality matches the personality information when the vehicle is driving by the driver, and the intermediate effect parameter includes any one or more of comfort, security, efficiency and economy, and the level includes a high level, a medium level and a low level; determining a control strategy according to the level of the intermediate effect parameter, the control strategy is used by the virtual character to perform information exchange between the driver of the vehicle and the vehicle, the control strategy includes a driving mode and/or a vehicle control parameter; and controlling the vehicle according to the control strategy.

## Description

The present application claims priority to Chinese patent application No. 202210355567.5 filed with CNIPA on April 6, 2022, and entitled "vehicle control method and vehicle control apparatus ", the entire contents of which are incorporated herein by reference.

### TECHNICAL FIELD

The present application relates to the technical field of automobiles, and more particularly, to a vehicle control method and a vehicle control apparatus.

### BACKGROUND

Currently, vehicle intelligence is an important development direction in the field of vehicles. Among them, an intelligent driving companion is an important technology for vehicle intelligence. Intelligent driving companion refers to an artificial intelligence model deployed on a vehicle or a cloud server of a vehicle, which can interact with a driver of the vehicle through an approach such as voice or graphics and text, to achieve an effect of improving the driver's driving experience.

A virtual digital human (also referred to as a virtual character) is one type of intelligent driving companion. Based on the virtual digital human technology, a virtual character may be displayed on the vehicle, and information interaction with the driver may be performed based on the virtual character, information communication with the driver can be performed more lively and vividly based on the virtual character, and driving experience is improved accordingly. In addition, customization of the virtual digital people is currently indicated. The driver may select an appearance of the virtual digital human according to his/her own preference, and simulate a facial expression features of a real person by using a technology such as 3D graphics rendering technology and motion capture, thereby further improving the driving experience of the driver.

However, although the driver does not need to set the character of the virtual digital human according to his/her own preference freely, the processing cores used by different virtual digital humans during information interaction are the same, a personalized setting of the virtual digital human still cannot be implemented.

### SUMMARY

In view of this, the prevent application provides a vehicle control method and a vehicle control apparatus, which aims at realizing personalized setting of a virtual character of the vehicle.

In the first aspect, a vehicle control method is provided. The method includes:
obtaining a parameter for personality configuration, the parameter for personality configuration is used to indicate personality information of a virtual character of the vehicle;
determining a level of an intermediate effect parameter according to the parameter for personality configuration and a first correspondence relationship, wherein the first correspondence relationship reflects a correspondence relationship between a personality and a desired driving experience of a driver whose personality matches the personality information when the vehicle is driving by the driver, and the intermediate effect parameter includes any one or more of comfort, security, efficiency and economy, and the level of the intermediate effect parameter includes a high level, a medium level and a low level;
determining a control strategy according to the level of the intermediate effect parameter, the control strategy is used by the virtual character to perform information exchange between the driver of the vehicle and the vehicle, the control strategy includes a driving mode and/or a vehicle control parameter; and
controlling the vehicle according to the control strategy.

In accordance with one possible design, the control strategy includes a vehicle control parameter, and the step of determining the control strategy according to the intermediate effect level includes:
determining the vehicle control parameter according to the level of the intermediate effect parameter and a parameter determination model, the vehicle control parameter indicates the control parameter adopted by the vehicle when achieving a driving experience corresponding to the level of the intermediate effect parameter, and the control parameter is used to control a hardware device of the vehicle;
the step of controlling the vehicle according to the control strategy includes:
   controlling the vehicle to configure the hardware device of the vehicle according to the vehicle control parameter.

In accordance with one possible design, the method further includes:
determining a navigation control parameter according to the parameter for personality configuration and a second correspondence relationship, the navigation control parameter is the navigation parameter adopted by the driver whose personality corresponds to the personality information when the vehicle is driving by the driver, the navigation parameter is used to generate a navigation route, and the second correspondence relationship comprises a correspondence relationship between the navigation control parameter and the personality information; and
controlling the vehicle to configure a navigation system of the vehicle according to the navigation control parameter.

In accordance with one possible design, the method further includes:
obtaining knowledge configuration information, wherein the knowledge configuration parameter is used to indicate a knowledge field mastered by the virtual character;
obtaining an information base corresponding to the knowledge field according to the knowledge configuration information; and
searching information corresponding to target knowledge from the information base, in response to receiving a voice interaction request sent by the driver of the vehicle and corresponding to a target knowledge point.

In accordance with one possible design, the method further includes:
obtaining identity configuration information, the identity configuration parameter is used to indicate identity information of the virtual character;
obtaining a corpus according to the identity configuration parameter, the corpus is determined according to a language habit of a person corresponding to the identity information;
generating and playing a response voice according to the corpus in response to receiving the voice interaction request sent by the driver of the vehicle.

In the second aspect, a vehicle control apparatus is provided in the present application. The apparatus includes:
an obtaining unit configured to obtain a parameter for personality configuration, the parameter for personality configuration is used to indicate personality information of a virtual character of the vehicle;
a determination unit configured to: determine a level of an intermediate effect parameter according to the parameter for personality configuration and a first correspondence relationship, where the first correspondence relationship reflects a correspondence relationship between a personality and a desired driving experience of a driver whose personality matches the personality information when the vehicle is driving by the driver, and the intermediate effect parameter includes any one or more of comfort, security, efficiency and economy, and the level of the intermediate effect parameter includes a high level, a medium level and a low level; determine a control strategy according to the level of the intermediate effect parameter, where the control strategy is used by the virtual character to perform information exchange between the driver of the vehicle and the vehicle, the control strategy includes a driving mode and/or a vehicle control parameter; and
a control unit configured to control the vehicle according to the control strategy.

In accordance with one possible design, the control strategy includes a vehicle control parameter,
the determination unit is specifically configured to determine the vehicle control parameter according to the level of the intermediate effect parameter and a parameter determination model, where the vehicle control parameter indicates the control parameter adopted by the vehicle when achieving a driving experience corresponding to the level of the intermediate effect parameter, and the control parameter is used to control a hardware device of the vehicle.

The control unit is specifically configured to control the vehicle to configure the hardware device of the vehicle according to the vehicle control parameter.

In accordance with one possible design, the control strategy further includes a navigation control parameter,
the determination unit is further configured to determine the navigation control parameter according to the parameter for personality configuration and a second correspondence relationship. The navigation control parameter is the navigation parameter adopted by the driver whose personality corresponds to the personality information when the vehicle is driving by the driver. The navigation parameter is used to generate a navigation route, and the second correspondence relationship includes a correspondence relationship between the navigation control parameter and the personality information.

The control unit is further configured to control the vehicle to configure a navigation system of the vehicle according to the navigation control parameter.

In accordance with one possible design, the obtaining unit is further configured to obtain knowledge configuration information, the knowledge configuration parameter is used to indicate a knowledge field mastered by the virtual character.

The determination unit is further configured to obtain an information base corresponding to the knowledge field according to the knowledge configuration information; search information corresponding to target knowledge from the information base, in response to receiving a voice interaction request sent by the driver of the vehicle and corresponding to a target knowledge point.

In accordance with one possible design, the obtaining unit is further configured to obtain identity configuration information. The identity configuration parameter is used to indicate identity information of the virtual character.

The determination unit is further configured to obtain a corpus according to the identity configuration parameter, where the corpus is determined according to a language habit of a person corresponding to the identity information; generate and play a response voice according to the corpus, in response to receiving the voice interaction request sent by the driver of the vehicle.

In the third aspect, a server is provided in one embodiment of the present application, the server includes a memory and a processor, the memory is configured to store an instruction or a code, and the processor is configured to execute the instruction or the code to cause the server to perform the vehicle control method described in any item of the first aspect. Where, the step of controlling the vehicle according to the control strategy includes: sending the control strategy to the vehicle.

In the fourth aspect, a vehicle is provided in one embodiment of the present application. The vehicle includes a receiving module and a controller. The receiving module is configured to receive a control strategy sent by a server, and the controller is configured to control the vehicle according to the control strategy.

In a fifth aspect, a system is provided in one embodiment of the present application. The system includes the server as described in the third aspect and the vehicle as described in the fourth aspect.

In the sixth aspect, the present application provides a computer storage medium, the computer storage medium stores a code, that, when being executed, enables a device that executes the code to implement the vehicle control method described in any item of the first aspect.

In the seventh aspect, a computer program product is provided in one embodiment of the present application. When the computer program product is executed on a device, the device is caused to perform steps of the vehicle control method described in any item of the first aspect.

A vehicle control method and a vehicle control apparatus are provided in the embodiments of the present application. The method may be configured to generate a virtual character of the vehicle based on the setting of the user. Specifically, when the method is performed, the parameter for personality configuration may be obtained first, and the parameter for personality configuration is the personality information set by the user and being used to indicate the virtual character to be generated. The user may be, such as the driver of the vehicle. Then, a control strategy matching the personality information may be determined according to the parameter for personality configuration. Then, the vehicle is controlled according to the control strategy. The control strategy is used by the virtual character to perform information interaction between the driver and the vehicle. The control strategy includes a driving mode and/or a vehicle control parameter, and the vehicle control parameter includes one or more of a sensitivity of an accelerator pedal, a torque force of a steering wheel, a fuel injection amount, an engine torque, and an engine speed. The control strategy of the virtual character is determined according to the personality of the virtual character set by the user. Thus, the virtual character generated according to the control strategy is matched with the parameter of the personality set by the user. In this way, the user can not only adjust the appearance of the virtual character flexibly, but also determine the personality of the virtual character by setting, thereby generating the virtual character corresponding to the personality and controlling the vehicle based on the personality of the virtual character. In this way, a personalized setting of the virtual digital human is realized, and the driving experience is further improved.

### DESCRIPTION OF THE DRAWINGS

In order to describe the technical solutions in the embodiments of the present application or the existing technologies more clearly, a brief introduction regarding the accompanying drawings that need to be used for describing the embodiments of the present application or the existing technologies is given below.
FIG. 1 illustrates a method flow chart of a vehicle control method provided in an embodiment of the present application;
FIG. 2 illustrates a schematic diagram of a first correspondence relationship provided in an embodiment of the present application; and
FIG. 3 illustrates a schematic structural diagram of a vehicle control apparatus provided in an embodiment of the present application.

### DETAILED DESCRIPTION OF EMBODIMENTS

In recent years, with the rapid development of technologies including artificial intelligence and virtual reality, a virtual digital people is applied gradually and rapidly in various fields. The virtual digital human is also referred to as a virtual character, a digital human, etc. The virtual digital human is an intelligent robot having human features and is formed by using digital modeling technology and by simulating facial expression features of a real person using techniques such as 3D graphics rendering technology and motion capture, and using technologies such as deep learning, semantic comprehension, and speech synthesis.

In particular, in the field of automobiles, virtual characters are widely used as intelligent driving companions. In the driving process of the vehicle, the driver may have a dialog with the virtual character, and control the vehicle through the virtual character. For example, the driver may make a sound so as to control the virtual character to change a navigation route. Alternatively, the driver may also make a sound to instruct the virtual character to adjust a part of the control strategy of the vehicle.

In order to further optimize the driver's driving experience, some virtual characters also support personalized customization of appearance. Specifically, the user may set appearance parameters of a virtual character through a web page or an application program. For example, parameters such as height, weight, and gender of the virtual character may be set. After receiving the appearance parameters set by the user, the server may adjust the model of the virtual character according to the appearance parameters, and send the adjusted model to the vehicle. **In** this way, the driver can see the adjusted virtual character in the driving process of the vehicle. Thus, the appearance of the virtual character may be adjusted in a personalized manner, and the driving experience is improved.

However, at present, the adjustment of the virtual character is only limited to the appearance of the virtual character, and an inherent processing logic of the virtual character cannot be adjusted. That is, different virtual characters of different images have the same processing logic, and thus personalized setting of the virtual character cannot be achieved.

In order to set the virtual character of the vehicle in a personalized manner, a vehicle control method and a vehicle control apparatus are provided in the embodiments of the present application.

Optionally, the technical solution provided in this embodiment of the present application is applied to a server. The server is configured to provide a virtual character service. A user may send a parameter for personality configuration to the server through an application program, a web page, or a vehicle controller. The server may generate the virtual character according to the parameter for personality configuration. In this way, when the vehicle is driving by the driver, the driver may communicate with the newly generated virtual character to improve the driving experience. It may be understood that the technical solutions provided in this embodiment of the present application may also be applied to a data processing device (e.g., a vehicle-mounted computer) mounted in a vehicle.

It should be noted that "user" and "driver" in this embodiment of the present application may be the same individual, or be different individuals. The user is a person or a terminal device that is capable of adjusting the virtual character. For example, the user may be owner of the vehicle. The driver is a person who drives the vehicle. The terminal device may be a mobile terminal device such as a mobile phone, alternatively, the terminal device may be a vehicle.

It should be noted that the "virtual character" in this embodiment of the present application may be a virtual character having a human shape, that is, a virtual digital human. The "virtual character" may also be in a non-human shape, (e.g., an unnatural image created by a person, such as a cat, a dog). Specifically, the virtual character is a specific character generated by a program through calculation and rendering, and the program for generating the virtual character is a software program that can perform information exchange with the driver and control the vehicle. For the convenience of illustration, the virtual character generated by the program and the program itself are collectively referred to as the virtual character.

The vehicle control method provided in one embodiment of the present application is described from the perspective of the server. It is obvious that, the described embodiments are some embodiments of the present disclosure, rather than all of the embodiments. All other embodiments, which are obtained by a person of ordinary skill in the art based on the embodiments of the present application without paying creative works, should all be included in the protection scope of the present application.

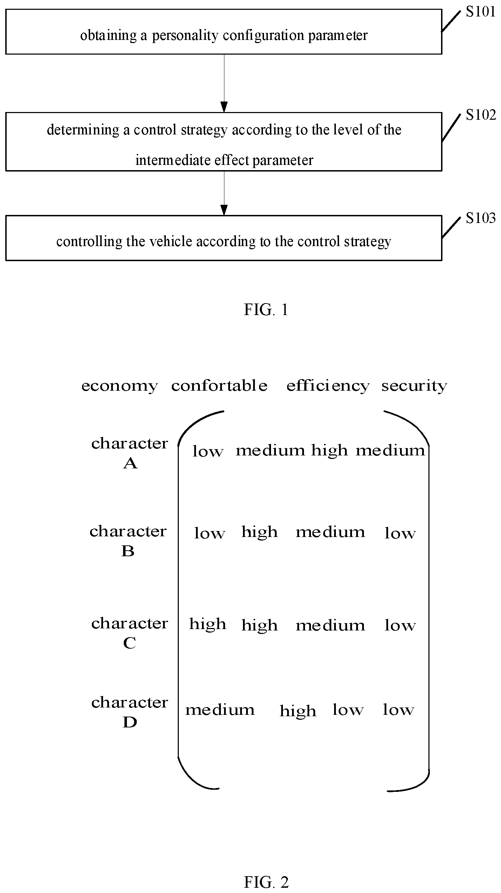

Referring to FIG. 1, FIG. 1 illustrates a method flowchart of the vehicle control method according to one embodiment of the present application. The vehicle control method includes following steps.

At a step of S101, a parameter for personality configuration is obtained.

In order to implement generation of the virtual character in the personalized manner, the server may obtain the parameter for personality configuration first. The parameter for personality configuration is used to indicate personality information of the virtual character of the vehicle, and represents the personality of the virtual character set by the user. For example, the user may set the virtual character through an application program of the mobile terminal, and the application program sends the parameter for personality configuration set by the user to the server through a network connection. Alternatively, the user may set the virtual character on the webpage, and send the parameter for personality configuration set by the user to the server through a browser.

In this embodiment of the present application, the parameter for personality configuration may include one or more parameters for personality description, and each of the parameters for personality description may be used to describe one virtual character to be generated. If the parameter for personality configuration includes a plurality of parameters for personality description, each of the plurality of parameters for personality description may be used to describe one personality of the virtual character to be generated. In this way, a more stereoscopic virtual character may be generated according to the plurality of parameters for personality description.

In an actual application scenario, multiple groups of candidate parameters for personality description may be provided for the user, the user may select one candidate parameter for personality description from each group of candidate parameters for personality description as the parameter for personality description included in the parameter for personality configuration.

For example, assuming that the parameters for personality configuration selected by the user include three parameters for personality description of "lovely", "adventure-loving" and "impatient", each parameter for personality description is used to describe one personality of the virtual character to be generated. The parameter for personality description of "adventure-loving", the parameter for personality description of "stable", the parameter for personality description of "decisive" and the parameter for personality description of "hesitant" belong to the same group of candidate parameter for personality description. The user may select one candidate parameter for personality description from the four candidate parameters for personality description as the parameter for personality description included in the parameter for personality configuration.

In addition to personality configuration information, the server may further obtain basic configuration information, knowledge configuration information, and identity configuration information. The basic configuration information is basic information of the virtual character, for example, the basic information of the virtual character may include information such as a gender, a height, and a weight of the virtual character. Optionally, the basic configuration information may also be used to configure an appearance of the virtual character. The knowledge configuration information is used to configure the field of the knowledge mastered by the virtual character. For example, the field of the knowledge may include historical classes, military classes, sports classes, and the like. The identity configuration information represents a preset identity of the virtual character. For example, the preset identity of the virtual character may include sales personnel, customer service personnel, and the like. Regarding the introduction of the knowledge configuration information and the identity configuration information, reference may be made to the following descriptions, and details of the knowledge configuration information and the identity configuration information are not repeatedly described here.

At a step of S102, a control strategy matching the personality information is determined according to the parameter for personality configuration.

After obtaining the parameter for personality configuration set by the user, the server may determine the control strategy corresponding to the personality information according to the parameter for personality configuration. The control strategy may be configured to control interaction between the virtual character and the driver, or be configured to control the vehicle, or be configured to control an auxiliary function of the vehicle, which are separately described below.

The first implementation approach: the parameter for personality configuration is used to control the interaction between the virtual character and the driver.

The interaction between the virtual character and the driver may include, for example, a sound of the virtual character. Correspondingly, the server may determine the sound parameter corresponding to the personality information set by the user according to the parameter for personality configuration, and then determine the sound of the virtual character according to the sound parameter. Specifically, after determining the sound parameter, the server may select a corresponding voice packet based on the sound parameter. The control strategy includes the sound parameter.

According to the aforementioned descriptions, the parameter for personality configuration may include a plurality of parameters for personality description. In some possible implementations, the sound parameter may be determined according to one or more parameters for personality description in the parameter for personality configuration. For example, assuming that the parameter for personality configuration includes a parameter for personality description of "lovely", the sound parameter includes a tone, a speech speed, a timbre, and a rhythm, the server may determine that the tone of the virtual character is "high", the speech speed is "medium", the timbre is "soft", and the rhythm is "soothing", according to the parameter for personality description of "lovely".

The second implementation approach: the parameter for personality configuration is used to control the vehicle.

In some possible implementations, the virtual character is used to assist the driver in controlling the vehicle. Correspondingly, after the personality information of the virtual character is set, the control style of the virtual character to the vehicle may be determined according to the personality information of the virtual character. The control strategy includes a driving mode and/or a vehicle control parameter. The vehicle control parameter includes one or more of a sensitivity of an accelerator pedal, a torque force of a steering wheel, a fuel injection amount, an engine torque, and an engine speed. The vehicle control parameter is used to assist the driver in controlling the vehicle.

When the control strategy is determined according to the parameter for personality configuration, the server determines the level of the intermediate effect parameter first according to the parameter for personality configuration and a first correspondence relationship. The first correspondence relationship includes a correspondence relationship between the parameter for personality configuration and the level of the intermediate effect parameter. The intermediate effect parameter is used to describe a driving experience of the vehicle. For example, the driving experience may include any one or more of comfort, security, efficiency, and economy. The level of the intermediate effect parameter may include, for example, a high level, a medium level, and a low level. Alternatively, the level of the intermediate effect parameter may be represented through specific digital quantization. Accordingly, the level of the intermediate effect parameter represents a desired driving experience during driving of the vehicle. For example, a high level of comfort may indicate that an experience of a passenger in a desired driving process is very comfortable. A high level of economy may represent less fuel consumption in the desired driving process.

Correspondingly, the level of the intermediate effect parameter determined according to the parameter for personality configuration indicates a desired driving experience of a driver whose personality matches the personality information when the vehicle is driving by the driver. For example, when a driver having a stable personality drives the vehicle, the driver often drives the vehicle relatively safely. If the personality of the virtual digital human corresponding to the personality configuration information is stable, the level of the intermediate effect parameter corresponding to "security" is a high level, the levels of the intermediate effect parameters corresponding to "comfort", "efficiency" and "economy" are medium-level or low-level. Then, if the personality of the virtual digital human corresponding to the personality configuration information is "frugality", the level of the intermediate effect parameter corresponding to "economy" is a high level, the levels of the intermediate effect parameters corresponding to "comfort", "efficiency" and "security" are medium-level or low-level.

In some possible implementations, the first correspondence relationship may reflect a correspondence relationship between the parameter for personality configuration and levels of a plurality of intermediate effect parameters. Specifically, the first correspondence relationship may be identified in FIG. 2. In the implementation approach shown in FIG. 2, the parameter for personality configuration corresponds to four intermediate effect parameters of comfort, security, efficiency and economy. The level of the parameter for personality configuration "personality A" corresponding to the intermediate effect parameter "comfort" is low, the level of the parameter for personality configuration "personality A" corresponding to the intermediate effect parameter "security" is medium, the level of the parameter for personality configuration "personality A" corresponding to the intermediate effect parameter "efficiency" is high, and the level of the parameter for personality configuration "personality A" corresponding to the intermediate effect parameter "economy" is low. Optionally, the first correspondence relationship may be obtained based on matrix screening by using an analytic hierarchy process.

After determining the level of the intermediate effect parameter, the server may determine the vehicle control parameter according to the level of the intermediate effect parameter and a parameter determination model. The vehicle control parameter indicates the control parameter required for the vehicle for enabling the driving experience of the vehicle to reach the driving experience required by the level of the intermediate effect parameter, the control parameter is used to control the hardware device of the vehicle.

Where, the parameter determination model may be obtained by training, and the data for training the parameter determination model includes a vehicle control parameter and the level of the intermediate effect parameter reached by the vehicle when the vehicle is controlled according to the vehicle control parameter. Specifically, one or more preset strategies may be stored in the server, and each of the preset strategies is used to ensure a level of an intermediate effect parameter. For example, for the intermediate effect parameter "comfort", the preset strategy for ensuring "high level" of the intermediate effect parameter may include "great torque force of steering wheel" and "low sensitivity of accelerator pedal". For the intermediate effect parameter "efficiency", the preset strategy for ensuing "high level" of the intermediate effect parameter may include "high engine speed".

After determining the level of the intermediate effect parameter according to the parameter for personality configuration, the server may select the intermediate effect parameter having a high level and select the preset strategy for ensuring the level of intermediate effect parameter. If the levels of the plurality of intermediate effect parameters corresponding to the parameter for personality configuration are high level, the server may separately select the preset strategies corresponding to the intermediate effect parameters having the high level, and determine the vehicle control parameter based on the plurality of selected preset strategies.

In some possible implementation approaches, levels of some intermediate effect parameters corresponding to the personality configuration information are high levels, and levels of some intermediate effect parameters are medium levels. Accordingly, the server may preferentially ensure the intermediate effect parameters having higher levels. That is, if a plurality of intermediate effect parameters correspond to the same vehicle control parameter, the server preferentially determines the value of the vehicle control parameter according to the preset strategy corresponding to the intermediate effect parameter having a high level. If the plurality of intermediate effect parameters do not include an intermediate effect parameter having high level, the server may determine the value of the vehicle control parameter according to a preset strategy corresponding to the intermediate effect parameter having a medium level.

For example, if the level of the intermediate effect parameter A corresponding to the parameter for personality configuration is a high level, the level of the corresponding intermediate effect parameter B is a medium level, and the level of the corresponding intermediate effect parameter C is a low level.

If the intermediate effect parameter A, the intermediate effect parameter B, and the intermediate effect parameter C correspond to the vehicle control parameter "torque force of steering wheel". Then, the server may determine the specific value of the vehicle control parameter "torque force of steering wheel" according to the preset strategy corresponding to the intermediate effect parameter A having the high level, and ignore the limitations of the intermediate effect parameter B and the intermediate effect parameter C on the vehicle control parameter "torque force of steering wheel".

If the intermediate effect parameter A does not correspond to the vehicle control parameter "torque force of steeling wheel", and the intermediate effect parameter B and the intermediate effect parameter C correspond to the vehicle control parameter "torque force of steeling wheel", the server may determine the specific value of the vehicle control parameter "torque force of steeling wheel" according to the preset strategy corresponding to the intermediate effect parameter B having the medium level, and ignore the limitation of the intermediate effect parameter C on the vehicle control parameter "torque force of steeling wheel".

If the intermediate effect parameter A and the intermediate effect parameter B do not correspond to the vehicle control parameter "torque force of steeling wheel", and the intermediate effect parameter C corresponds to the vehicle control parameter "torque force of steeling wheel", the server may determine the specific value of the vehicle control parameter "torque force of steeling wheel" according to a preset strategy corresponding to the intermediate effect parameter C having the low level. In this embodiment of the present application, the preset strategy may be obtained by consulting an expert, or be obtained based on driving data. The driving data includes a vehicle control parameter and a driving evaluation of driving the vehicle according to the vehicle control parameter. The driving evaluation includes a level of intermediate effect parameter. The third implementation approach: the parameter for personality configuration is used to control an external function of the vehicle.

In some possible implementations, the virtual character is used to assist the driver in controlling the external function of the vehicle. The external function of the vehicle may include, for example, a navigation function, an auxiliary driving function, a multimedia playing function, and the like. Correspondingly, after setting the personality information of the virtual character, the control style of the virtual character to the external function of the vehicle may be determined according to the personality information of the virtual character. The present application is described below by taking the parameter for personality configuration used for controlling the navigation function of the vehicle as an example. The navigation function of the vehicle is controlled by navigation control parameters.

When a navigation control parameter is determined according to the parameter for personality configuration, the server may determine the navigation control parameter based on the parameter for personality configuration and the second correspondence relationship. The second correspondence relationship includes a correspondence relationship between the parameter for personality configuration and the navigation control parameter. The navigation control parameter indicates the navigation parameter more prone to be adopted by the driver whose personality corresponds to the personality information represented by the parameter for personality configuration when the vehicle is driving by the driver. Specifically, the navigation control parameter may be used for path planning.

That is, if the navigation control parameter is used for path planning, the navigation route obtained by planning based on the navigation control parameter determined according to the second correspondence relationship and the parameter for personality configuration is a navigation route with the maximum selection probability when the driver whose personality conforms to the parameter for personality configuration drives the vehicle actually. For example, assuming that the parameter for personality configuration includes a parameter for personality description "impatient". Obviously, an impatient driver may be more prone to select the fastest route to travel. Then, a route which is obtained by performing path planning according to the navigation control parameter determined by the second correspondence relationship and the parameter for personality description "impatient" may be the fastest route to the destination. Assuming that the parameter for personality configuration includes a parameter for personality description "frugality", obviously, a frugal driver may be prone to select the most economic route to travel. Thus, the route which is obtained by performing path planning according to the navigation control parameter determined by the second correspondence relationship and the parameter for personality description "frugality" may be a route with the lowest driving cost (including oil consumption cost and toll fee). Optionally, the second correspondence relationship may be obtained based on matrix screening by using an analytic hierarchy process.

It should be noted that the first implementation approach and/or the third implementation approach may also determine the level of the intermediate effect parameter based on the parameter for personality configuration, and then determine the final control parameter based on the level of the intermediate effect parameter, by using an approach similar to the second implementation approach.

For example, regarding the first implementation approach, the voice effect of the virtual digital human matching the parameter for personality configuration may be represented by an effect parameter such as timbre, tone, voice speed, and rhythm, then, the final voice configuration of the virtual digital human is determined based on the aforementioned effect parameter. Specifically, the final voice configuration of the virtual digital human may be obtained through a text-to-speech (TTS) system, and details are not described herein again.

It may be understood that the aforementioned three implementation approaches may be implemented in combination, or be implemented independently.

It is clear from the aforementioned descriptions that the server may further obtain a knowledge configuration parameter and/or an identity configuration parameter. If the server obtains the knowledge configuration parameter, the server may further obtain the information base of the knowledge field corresponding to the knowledge configuration parameter according to the knowledge configuration parameter. In this way, when the voice interaction with the driver is subsequently performed, the corresponding information may be searched from the information base. For example, assuming that the driver sends a voice interaction request related to the target knowledge point to the virtual character, the virtual character may search information related to the target knowledge point from the information base.

If the server obtains the identity configuration parameter, the server may further obtain the corpus according to the identity configuration parameter, and the corpus is determined according to the language habit of the person corresponding to the identity information. In this way, when the voice interaction with the driver is subsequently performed, a response message may be generated based on the corpus.

At a step of S103, the vehicle is controlled according to the control strategy.

After determining the control strategy, the server may control the vehicle according to the control strategy. For example, the server may send the vehicle control parameter to the vehicle to instruct the controller of the vehicle to apply the vehicle control parameter. In this way, when the vehicle is driving by the driver, the vehicle control parameter used for controlling the vehicle is the vehicle control parameter matching the virtual character.

It is clear from the aforementioned descriptions that, in addition to the control strategy, the server may further determine parameters such as the navigation control parameter and/or the voice control parameter according to the parameter for personality configuration. If the server determines the navigation control parameter according to the personality configuration parameter, the server may send the navigation control parameter to the vehicle, in order that the controller of the vehicle determines the navigation policy of the vehicle according to the navigation control parameter. If the server determines the voice control parameter according to the personality configuration information, the server may send the voice control parameter to the vehicle, in order that the controller of the vehicle generates a voice signal of the virtual character according to the voice control parameter.

In some possible implementation approaches, the server may determine, based on a subscription service of the user, data sent to the vehicle based on the subscription service of the user. For example, assuming that the user subscribes a service of controlling the vehicle through the virtual character, and does not subscribe a service of providing a navigation range controlled by the virtual character. Then, the server may send a control strategy to the vehicle, instead of sending the navigation control parameter to the vehicle.

A vehicle control method and a vehicle control apparatus are provided in the embodiments of the present application, the method may be configured to generate the virtual character of the vehicle according to the setting of the user. Specifically, when the method is performed, the parameter for personality configuration may be obtained first, the parameter for personality configuration is set by the user and is used to indicate the personality information of the virtual character to be generated. The user may be, for example, the driver of the vehicle. Then, a control strategy matching the personality information may be determined according to the parameter for personality configuration, and then the vehicle is controlled according to the control strategy. The control strategy is used by the virtual character to perform information interaction between the driver and the vehicle. The control strategy includes a driving mode and/or a vehicle control parameter, and the vehicle control parameter includes one or more of a sensitivity of an accelerator pedal, a torque force of a steeling wheel, a fuel injection amount, an engine torque, and an engine speed. The control strategy of the virtual character is determined according to the personality of the virtual character set by the user, such that the virtual character generated according to the control strategy can be matched with the personality parameter set by the user. In this way, the user can not only adjust the appearance of the virtual character flexibly, but also determine the personality of the virtual character by setting, thereby generating a virtual character corresponding to the personality and controlling the vehicle based on the personality of the virtual character. In this way, a personalized setting of the virtual digital human is realized, and the driving experience is further improved.

Some specific implementation approaches of the vehicle control method provided in the embodiments of the present application are discussed above. On this basis, a corresponding apparatus is further provided in the present application. The apparatus provided in the embodiments of the present application is described below from a perspective of function modularization.

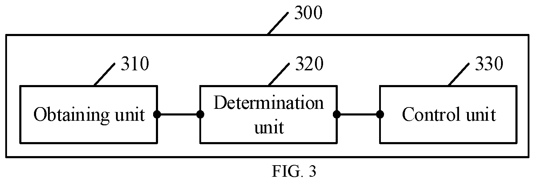

Referring to FIG. 3, FIG. 3 illustrates a schematic structural diagram of a vehicle control apparatus, the apparatus 300 includes an obtaining unit 310, a processing unit 320, and a control unit 330.

Where, according to the second aspect, an embodiment of this application provides a vehicle control apparatus is provided in an embodiment of the present application. The apparatus includes:
an obtaining unit 310 configured to obtain a parameter for personality configuration, the parameter for personality configuration is used to indicate personality information of a virtual character of a vehicle.

The determination unit 320 is configured to determine a level of an intermediate effect parameter according to the parameter for personality configuration and a first correspondence relationship, where the first correspondence relationship reflects a correspondence relationship between a personality and a desired driving experience of a driver whose personality matches the personality information when the vehicle is driving by the driver, and the intermediate effect parameter includes any one or more of comfort, security, efficiency and economy, and the level includes a high level, a medium level and a low level; determine a control strategy according to the level of the intermediate effect parameter. The control strategy is used by the virtual character to perform information exchange between the driver of the vehicle and the vehicle. The control strategy includes a driving mode and/or a vehicle control parameter. The vehicle control parameter includes one or more of a sensitivity of an accelerator pedal, a torque force of a steering wheel, a fuel injection amount, an engine torque, and an engine speed.

The control unit 330 is configured to control the vehicle according to the control strategy.

A vehicle control apparatus is provided in the embodiment of the present application. The method may be configured to generate the virtual character of the vehicle according to the setting of the user. Specifically, when the method is performed, the parameter for personality configuration may be obtained first, the parameter for personality configuration is set by the user and is used to indicate the personality information of the virtual character to be generated. The user may be, for example, the driver of the vehicle. Then, a control strategy matching the personality information may be determined according to the parameter for personality configuration, and then the vehicle is controlled according to the control strategy. The control strategy is used by the virtual character to perform information interaction between the driver and the vehicle. The control strategy includes a driving mode and/or a vehicle control parameter, and the vehicle control parameter includes one or more of a sensitivity of an accelerator pedal, a torque force of a steeling wheel, a fuel injection amount, an engine torque, and an engine speed. The control strategy of the virtual character is determined according to the personality of the virtual character set by the user, such that the virtual character generated according to the control strategy can be matched with the personality parameter set by the user. In this way, the user can not only flexibly adjust the appearance of the virtual character, but also determine the personality of the virtual character by setting, thereby generating a virtual character corresponding to the personality and controlling the vehicle based on the personality of the virtual character. In this way, a personalized setting of the virtual digital human is realized, and the driving experience is further improved.

Optionally, In accordance with one possible design, the control strategy includes the vehicle control parameter.

The determination unit 320 is configured to determine the vehicle control parameter according to the level of the intermediate effect parameter and a parameter determination model. The vehicle control parameter indicates the control parameter adopted by the vehicle when achieving a driving experience corresponding to the level of the intermediate effect parameter, and the control parameter is used to control a hardware device of the vehicle.

The control unit 330 is specifically configured to control the vehicle to configure the hardware device of the vehicle according to the vehicle control parameter.

Optionally, in some implementations, the determination unit 320 is further configured to determine the navigation control parameter according to the parameter for personality configuration and a second correspondence relationship. The navigation control parameter is the navigation parameter adopted by the driver whose personality corresponds to the personality information when the vehicle is driving by the driver. The navigation parameter is used to generate a navigation route, and the second correspondence relationship includes a correspondence relationship between the navigation control parameter and the personality information.

The control unit 330 is further configured to control the vehicle to configure a navigation system of the vehicle according to the navigation control parameter.

Optionally, in some possible implementations, the obtaining unit 320 is further configured to obtain knowledge configuration information, the knowledge configuration parameter is used to indicate a knowledge field mastered by the virtual character.

The determination unit 320 is further configured to obtain an information base corresponding to the knowledge field according to the knowledge configuration information.

The control unit 330 is further configured to search information corresponding to target knowledge from the information base, in response to receiving a voice interaction request sent by the driver of the vehicle and corresponding to a target knowledge point.

Optionally, in some possible implementations, the obtaining unit 310 is further configured to obtain identity configuration information. The identity configuration parameter is used to indicate identity information of the virtual character.

The determination unit 320 is further configured to obtain a corpus according to the identity configuration parameter. The corpus is determined according to a language habit of a person corresponding to the identity information.

The control unit 330 is further configured to generate and play a response voice according to the corpus, in response to receiving the voice interaction request sent by the driver of the vehicle.

A corresponding device, a computer storage medium, and a vehicle for implementing any vehicle control method provided in the embodiments of the present application are further provided in the embodiments of the present application.

This device includes a memory and a processor, the memory is configured to store an instruction or code, and the processor is configured to execute the instruction or code to cause the device to perform the vehicle control method described in any embodiment of the present application.

The code is stored in the computer storage medium. When the code is executed, the device that executes the code implements the vehicle control method according to any embodiment of the present application.

The vehicle is configured to generate the virtual character according to the control parameter sent by the server.

"first" and "second" in the designations including "first" and "second" (if any), as mentioned in the embodiments of the present application, are merely used as identifiers, and do not represent a first sequence and a second sequence.

It can be learned from the description of the aforementioned implementations that a person skilled in the art may clearly understand that all or some of the steps in the method in the embodiments may be implemented through software and a universal hardware platform. Based on this understanding, the technical solutions of the present application may be embodied in a form of a software product, and the computer software product may be stored in a storage medium, such as a read-only memory (ROM)/RAM, a magnetic disk, an optical disk, or the like, and includes a plurality of instructions for causing a computer device (which may be a personal computer, a server, or a network communication device such as a router) to perform the method described in each of the embodiments or in some parts of the embodiments of the present application.

The various embodiments in the specification are described in a progressive manner, and the same or similar parts between the various embodiments may refer to each other. Each embodiment focuses on the differences from other embodiments. In particular, for the apparatus embodiment, since the apparatus embodiment is basically similar to the method embodiment, thus, the description of the apparatus embodiment is relatively simple. Regarding the relevant part, reference may be made to some descriptions of the method embodiment. Some or all of the modules may be selected according to the actual requirement to achieve the objectives of the solutions of the embodiments. The person of ordinary skill in the art may understand and implement the embodiments without paying creative works.

The foregoing descriptions are merely exemplary implementation approaches of the present application, and are not intended to limit the protection scope of the present application.

## Claims

1. A vehicle control method, **characterized in that**, the method comprises steps of:
obtaining a parameter for personality configuration, wherein the parameter for personality configuration is used to indicate personality information of a virtual character of a vehicle;
determining a level of an intermediate effect parameter according to the parameter for personality configuration and a first correspondence relationship, wherein the first correspondence relationship reflects a correspondence relationship between a personality and a desired driving experience of a driver whose personality matches the personality information when the vehicle is driving by the driver, the intermediate effect parameter comprises any one or more of comfort, security, efficiency and economy, and the level of the intermediate effect parameter comprises a high level, a medium level and a low level;
determining a control strategy according to the level of the intermediate effect parameter, wherein the control strategy is used by the virtual character to perform information exchange between the driver of the vehicle and the vehicle, the control strategy comprises a driving mode and/or a vehicle control parameter; and
controlling the vehicle according to the control strategy.

2. The method according to claim 1, wherein the control strategy comprises a vehicle control parameter, and the step of determining the control strategy according to the intermediate effect level comprises:
determining the vehicle control parameter according to the level of the intermediate effect parameter and a parameter determination model, wherein the vehicle control parameter indicates the control parameter adopted by the vehicle when achieving a driving experience corresponding to the level of the intermediate effect parameter, and the control parameter is used to control a hardware device of the vehicle;
the step of controlling the vehicle according to the control strategy comprises:
controlling the vehicle to configure the hardware device of the vehicle according to the vehicle control parameter.

3. The method according to claim 1, wherein the method further comprises:
determining a navigation control parameter according to the parameter for personality configuration and a second correspondence relationship, wherein the navigation control parameter is the navigation parameter adopted by the driver whose personality corresponds to the personality information when the vehicle is driving by the driver, the navigation parameter is used to generate a navigation route, and the second correspondence relationship comprises a correspondence relationship between the navigation control parameter and the personality information; and
controlling the vehicle to configure a navigation system of the vehicle according to the navigation control parameter.

4. The method according to claim 1, wherein the method further comprises:
obtaining knowledge configuration information, wherein the knowledge configuration parameter is used to indicate a knowledge field mastered by the virtual character;
obtaining an information base corresponding to the knowledge field according to the knowledge configuration information;
searching information corresponding to target knowledge from the information base, in response to receiving a voice interaction request sent by the driver of the vehicle and corresponding to a target knowledge point.

5. The method according to any one of claims 1-4, wherein the method further comprises:
obtaining identity configuration information, wherein the identity configuration parameter is used to indicate identity information of the virtual character;
obtaining a corpus according to the identity configuration parameter, wherein the corpus is determined according to a language habit of a person corresponding to the identity information; and
generating and playing a response voice according to the corpus in response to receiving the voice interaction request sent by the driver of the vehicle.

6. A vehicle control apparatus, **characterized in that**, the vehicle control apparatus comprises:
an obtaining unit configured to obtain a parameter for personality configuration, wherein the parameter for personality configuration is used to indicate personality information of a virtual character of the vehicle;
a determination unit configured to determine a level of an intermediate effect parameter according to the parameter for personality configuration and a first correspondence relationship, wherein the first correspondence relationship reflects a correspondence relationship between a personality and a desired driving experience of a driver whose personality matches the personality information when the vehicle is driving by the driver, and the intermediate effect parameter comprises any one or more of comfort, security, efficiency and economy, and the level of the intermediate effect parameter comprises a high level, a medium level and a low level; determine a control strategy according to the level of the intermediate effect parameter, wherein the control strategy is used by the virtual character to perform information exchange between the driver of the vehicle and the vehicle, the control strategy comprises a driving mode and/or a vehicle control parameter; and
a control unit configured to control the vehicle according to the control strategy.

7. The vehicle control apparatus according to claim 6, wherein the control strategy comprises a vehicle control parameter,
the determination unit is specifically configured to determine the vehicle control parameter according to the level of the intermediate effect parameter and a parameter determination model, wherein the vehicle control parameter indicates the control parameter adopted by the vehicle when achieving a driving experience corresponding to the level of the intermediate effect parameter, and the control parameter is used to control a hardware device of the vehicle;
the control unit is specifically configured to control the vehicle to configure the hardware device of the vehicle according to the vehicle control parameter.

8. The vehicle control apparatus according to claim 6, wherein the control strategy further comprises a navigation parameter,
the determination unit is further configured to determine the navigation control parameter according to the parameter for personality configuration and a second correspondence relationship, wherein the navigation control parameter is the navigation parameter adopted by the driver whose personality corresponds to the personality information when the vehicle is driving by the driver, the navigation parameter is used to generate a navigation route, and the second correspondence relationship comprises a correspondence relationship between the navigation control parameter and the personality information; and
the control unit is further configured to control the vehicle to configure a navigation system of the vehicle according to the navigation control parameter.

9. A system, **characterized in that**, the system comprises a server and a vehicle, the server is configured to implement the vehicle control method according to any one of claims 1-5, wherein the server is configured to send the control strategy to the vehicle;
the vehicle is configured to receive the control strategy sent by the server.

10. A computer storage medium, **characterized in that**, the computer storage medium stores a code, that, when being executed, enables a device that executes the code to implement the vehicle control method according to any one of claims 1-5.

11. A computer program product, **characterized in that**, when the computer program product is executed on a device, the device is caused to perform steps of the vehicle control method according to any one of claims 1-5.
